# EUROPEAN PATENT SPECIFICATION

(11) **EP 1 127 813 B1**
(45) Date of publication and mention of the grant of the patent: **14.04.2004**
(21) Application number: 01200649.0
(22) Date of filing: 23.02.2001
(51) Int. Cl.: B65G 17/06, B60P 1/36

(54) **Conveyor**
Förderbahn
Convoyeur

(30) Priority: 24.02.2000 NL 1014489
(43) Date of publication of application: 29.08.2001
(73) Proprietor: Cargomac B.V., 7741 MK Coevorden (NL)
(72) Inventor: Nijhof, Dirk, 7783 EK Gramsbergen (NL); Mater, Nicolaas Marc, 7559 KK Hengelo (Ov.) (NL); de Raad, Frans Arian Heino, 7742 PW Coevorden (NL)
(74) Representative: De Hoop, Eric

(56) References cited:
- EP-A- 0 300 700
- DE-B- 1 123 254
- FR-A- 2 721 291
- GB-A- 327 772
- US-A- 4 765 455
- PATENT ABSTRACTS OF JAPAN vol. 009, no. 060 (M-364), 16 March 1985 (1985-03-16) & JP 59 194918 A (NIHON TEIRAA KK), 5 November 1984 (1984-11-05)

## Description

The invention relates to a conveyor floor, in particular a conveyor floor for a cargo space of a lorry (movable loading floor) and/or a loading/unloading track (stationary loading floor).

A conveyor floor as described in the preamble of claim 1 is known from GB-A-327.772.

It is known to provide cargo spaces of lorries or trailers with a floor with which the load can be moved. An example of this are the cargo spaces provided with slats that are reciprocally movable in conveyance direction. In such cases the floor is made of several groups of slats, in which each group is connected to its own driving cylinder.

Another example are the cargo spaces provided with rolls or lamella floors. In these cases the floor consists of a series of lamellas situated transverse to the loading/unloading direction and which are attached to chains that can be driven in loading/unloading direction.

The lamellas are usually formed by aluminium slats connected at their ends to the chains by means of a coupling piece. To that end, the coupling piece, which is a forming piece, fittingly extends with a portion in the slat end and is provided itself with a receiving space for fittingly receiving the protruding portion of an extended chain link pin. Usually the chain situated next to the lamella end extends to near the bearing area of the lamella. Because of that, a load supported on the lamella may contact the chain, and get damaged as a result. This may cause damage to the supported product itself, particularly when it is hardly wrapped, as is the case with rolls of paper. Damage could be prevented by placing the load outside of the chain area, though this limits the useful loading area.

A solution for this is the continuation of the lamellas over the chain. To that end the ends of the lamellas have to brought into the correct shape, in case of sections by removing material. However this is time consuming and quite costly.

It is an object of the invention to provide a better alternative for the known solution. To that end the invention provides a conveyor floor as described in claim 1.

Thus a part -the coupling piece- which has to be used anyway for the coupling of chain and lamella, is used for the upward shielding of the chain, so that the load cannot contact the chain. The coupling piece can easily be moulded or cast in the correct shape from a (relatively) cheap material. For instance moulding with a synthetic material, such as PE, or casting with aluminium, come to mind here.

Preferably the portion extending over the chain extends at least up to the outer side of the chain in question, so that the space above the chain may be used entirely for placing the cargo.

In an embodiment the portion extending over the chain is supported on the chain with its lower side, so that there as well a load can be supported.

In an alternative embodiment the coupling piece extends to a level which remains spaced apart below the support surface of the lamellas. In that case the load cannot support on the coupling piece, so that a possibly necessary rolling movement of the chain parts cannot be impeded.

In a further embodiment of the conveyor floor according to the invention the coupling piece is attached to the chain, preferably is connected to the chain by means of a snap connection, as a result of which not only the mounting can be carried out more easily and reliably, but also coupling piece and chain are secured with respect to each other in transverse direction, as a result of which wear and tear of the parts and damage of the load is drastically prevented.

In an advantageous manner the lamellas may have a hollow receiving space for the insertion part of the coupling piece, which receiving space is upwardly and downwardly bounded by upper and lower walls of said lamellas, in which the insertion part merges into the portion extending over the chain, for instance via a narrowing.

The invention further provides a cargo space or lorry provided with a conveyor floor according to the invention.

The invention further provides a loading/unloading track provided with a conveyor floor according to the invention.

The invention will be elucidated below on the basis of an exemplary embodiment shown in the attached figures, in which:
Figure 1 schematically shows a loading/unloading arrangement in which use is made of the invention;
Figures 2A and 2B schematically show a loading floor according to the invention, accommodated in a lorry;
Figure 3 schematically shows a cross-section of the loading floor of the lorry of figures 2A and 2B;
Figures 4A and 4B show a top view and a cross-section of a portion of a conveyor floor according to the invention; and
Figure 4C shows a cross-section similar to figure 4B of an alternative embodiment.

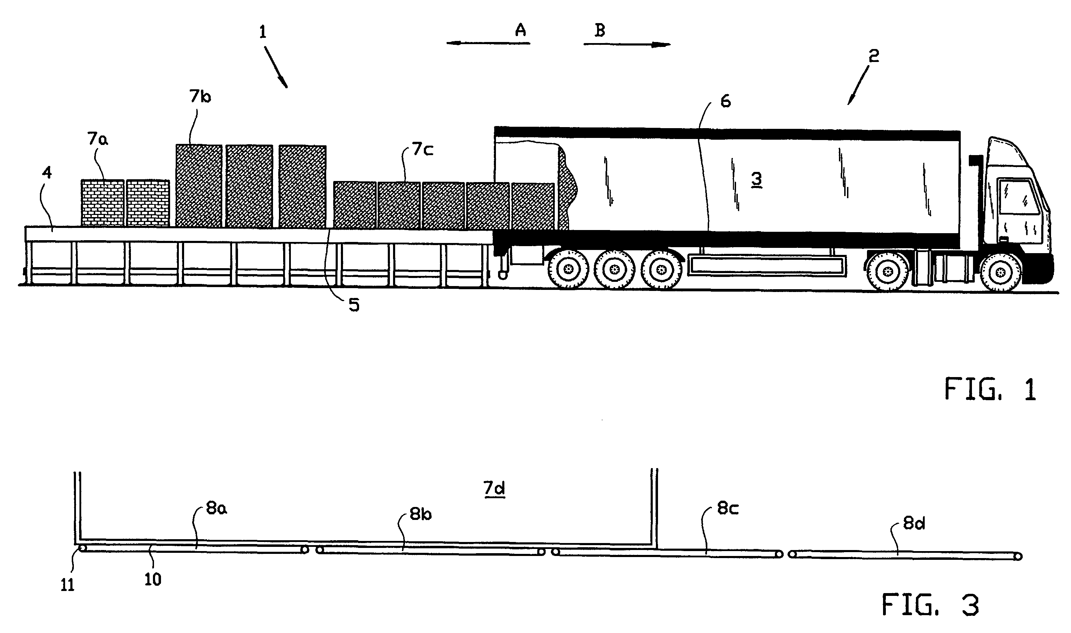

In figure 1 the loading/unloading arrangement 1 is shown with a lorry/trailer 2, which is provided with cargo space 3 having a loading floor 6. The trailer 2 is placed against the end of a loading/unloading track 4, as they are known from so-called distribution centres. The loading/unloading track 4 is provided with a conveyor floor 5, on which objects to be loaded or unloaded 7a, 7b and 7c have been placed. Both the loading/unloading floor 5 and the cargo space floor 6 can be designed as a so-called lamella floor, which is driven by the usual means which are not shown, either in the direction A or the direction B, in case of unloading and loading, respectively, of the trailer 2.

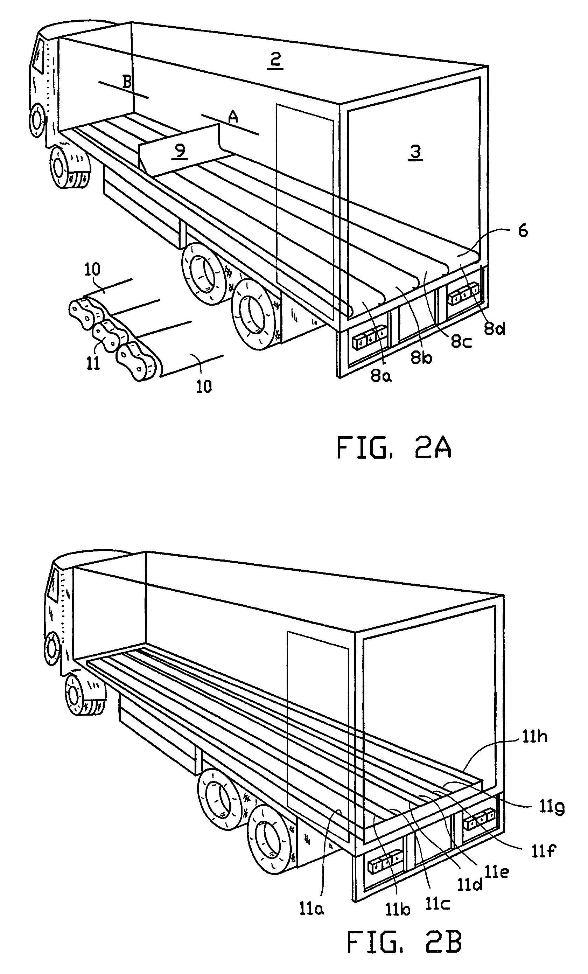

In the figures 2A and 2B this is further elaborated on for the trailer 2. Here the cargo space floor 6 is built up -in the known manner- from four series 8a, 8b, 8c, 8d of lamellas 10, which may be made of aluminium. Said aluminium lamellas are each at both ends connected to respective chains 11 a,b, 11 c,d, 11e,f and 11 g,h by means of a coupling piece. The chains are driven in the direction A or B in order to take the load placed on the lamellas 10 either into or out of the cargo space 3. At the inner end of the lamella series a partition 9 has been arranged, which prevents the load placed there from tilting to B during the conveying movement.

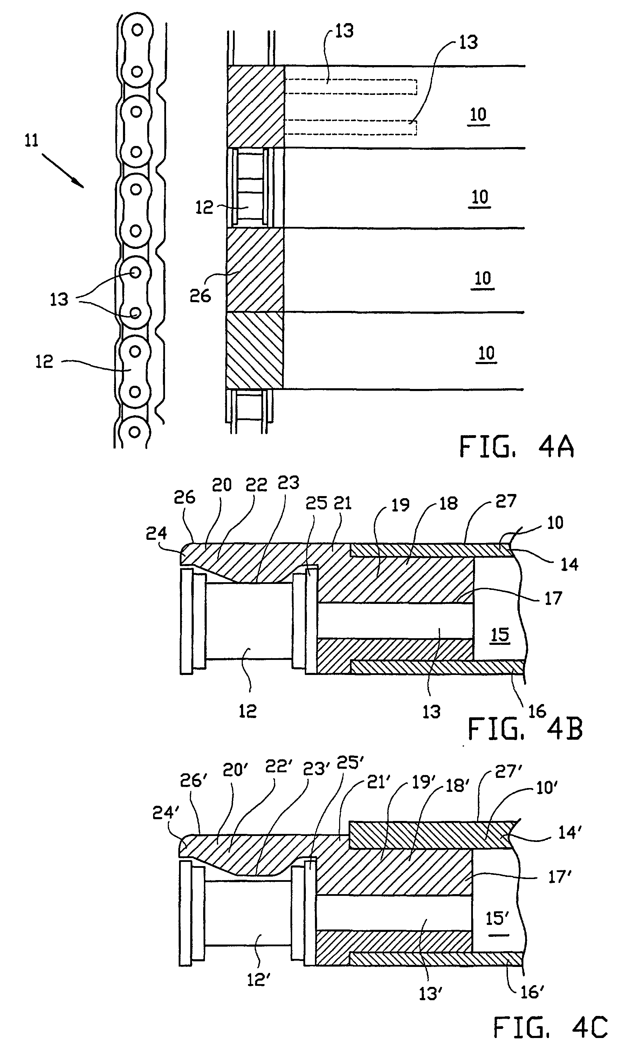

As can be seen in figure 3 a load may extend over several lamella floors, Said load may for instance be a roll of paper 7d. In the state of the art it could be problematic that the roll of paper might contact the chains and get damaged as a result of that. In order to solve this the construction such as for instance shown in figures 4A and 4B or 4C was invented.

The chain 11 is built up of links 12 in the usual manner and said links are connected to a coupling piece 18, which is made of synthetic material, with the help of pins 13 which extend through the links, which coupling piece 18 is accommodated with an insertion part 19 in the hollow space at the end of lamella 10, bounded by the load carrying top wall 14, the bottom wall 16 and the side walls 15. The pin 13 is fittingly received in the receiving space 17 formed in the insertion part 19. By means of coupling piece 18 it is ensured that the lamellas 10 move along with the chain in the conveyance direction.

Special is the fact that the coupling piece 18 in the direction of the extension of the lamella 10 is continued in a collar 20, which is connected to the insertion part 19 by means of a bridge portion 21 which is formed as a unity with both. The bridge portion 21 as it were forms a neck to the collar portion 20, which itself is provided with a downward protrusion 22, which with its lower side 23 abuts the upper side of the chain. The collar portion 20 extends up to the outer side of the chain 11.

At the location of the bridge portion 21 at its lower side a notch 25 is formed, which notch is bounded by the downward protrusion 22. In it the side of the link 12 can be received. The neck portion of the bridge portion 21 makes it possible that the collar portion 20 can slightly rotate, elastically, in the plane of the drawing. As a result a snap activity is realised, as a result of which in the situation shown in figure 4B the link 12 is secured with respect to the coupling piece 18, in the direction, as seen in the drawing, from left to right and vice versa. As a result the freedom of movement in the conveyor floor as present in the state of the art is limited and wear and tear and damage to the load carried by the conveyor floor is prevented.

It can be seen in figure 4B that the top surface 26 of the collar portion 20 and the neck portion 21 lie in one plane with the top surface 27 of the lamella 10, so that the load to be carried is entirely shielded from the chain 11. Near the transitions between two adjacent lamella floors, for instance 8a and 8b, the collar portions 20 of the coupling pieces belonging to the adjacent lamellas 10 situated transverse to the conveyance direction, will at least be able to lie almost against each other, in order to limit the possibility of damage to the carried load as much as possible.

In figure 4C the top wall 14' is designed thicker, so that it extends beyond the top surface 26', and that the bottom surface 23' is spaced apart from the link 12'. In this case a load cannot press down on the coupling piece and the downward protrusion 22' will not press down on the link 12', which is advantageous when the link parts have to be able to roll.

It will be understood that the conveyor floor thus built up can also be used in other arrangements in which a load has to be moved, such as in the loading/unloading track 5 of figure 1.

## Claims

1. Conveyor floor (5;6) comprising a series of lamellas (10;10') positioned with their direction of extension transverse to the conveyance direction of the floor and having opposite ends, wherein at said ends said lamellas are connected by means of coupling pieces (18;18') to a respective conveyor chain (11), in which the lamellas have a support surface for supporting a load to be conveyed, **characterized in that** the conveyor chain (11) is situated adjacent to the lamellas (10;10'), as considered in the direction of extension of the lamellas, and **in that** the coupling pieces (18;18') have a portion (20;20') which projects from the respective lamella end in the direction of extension of the lamella and over the chain connected to said coupling piece.

2. Conveyor floor (5;6) according to claim 1, in which the portion (20;20') of the coupling piece (18; 18') extending over the chain extends at least up to the outer side of the chain (11) in question.

3. Conveyor floor (5;6) according to claim 1 or 2, in which the portion (20) of the coupling piece (18) extending over the chain (11) is supported on the chain with its lower side (22).

4. Conveyor floor (5;6) according to claim 1 or 2, in which the portion (20') of the coupling piece (18') extending over the chain extends lower than the support surface (27') of the lamellas (10').

5. Conveyor floor (5;6) according to claim 4, in which the portion (20') of the coupling piece (18') extending over the chain with its lower part (22',23') is spaced apart from the portion (12') of chain situated below it.

6. Conveyor floor (5;6) according to any one of the preceding claims, in which the coupling piece (18;18') is attached to the chain (11), preferably is connected to the chain by means of a snap connection.

7. Conveyor floor (5;6) according to any one of the preceding claims, in which the coupling piece (18;18') has an insertion part (19;19') and in which the lamellas (10;10') have a hollow receiving space for the insertion part of the coupling piece, which receiving space is upwardly and downwardly bounded by an upper wall (14; 14') and a lower wall (16;16') and preferably side walls (15;15') of said lamellas (10;10'), in which the insertion part merges into the portion extending over the chain, for instance via a narrowing (21;21').

8. Conveyor floor (5;6) according to any one of the preceding claims, in which the coupling pieces (18;18') are made of synthetic material, preferably poly-ethylene.

9. Cargo space (3) or lorry (2) provided with a conveyor floor (5) according to any one of the preceding claims.

10. Loading/unloading track (4) provided with a conveyor floor (6) according to any one of the claims 1-8.

## Patentansprüche

1. Förderboden (5; 6) umfassend eine Reihe von Lamellen (10; 10'), die mit ihrer Erstreckungsrichtung quer auf der Förderrichtung des Bodens stehen und gegenüberliegende Enden haben, wobei die Lamellen an diesen Enden durch Kupplungsstücken (18; 18') mit einer jeweiligen Förderkette (11) verbunden sind, wobei die Lamellen eine Stützfläche zum Stützen einer zu fördernden Ladung haben, **dadurch gekennzeichnet, daß** die Förderkette (11) neben den Lamellen (10; 10') gelegen ist, in der Erstreckungsrichtung der Lamellen betrachtet, und daß die Kupplungsstücke (18; 18') einen Abschnitt (20; 20') haben, der von dem jeweiligen Lamellenende in die Erstreckungsrichtung der Lamelle und über die mit dem Kupplungsstück verbundene Kette reicht.

2. Förderboden (5; 6) nach Anspruch 1, wobei der sich über die Kette erstreckende Abschnitt (20; 20') des Kupplungsstücks (18; 18') sich zumindest bis an die Außenseite der betreffenden Kette (11) erstreckt.

3. Förderboden (5; 6) nach Anspruch 1 oder 2, wobei der sich über die Kette (11) erstreckende Abschnitt (20) des Kupplungsstücks (18) mit seiner Unterseite (22) auf der Kette stützt.

4. Förderboden (5; 6) nach Anspruch 1 oder 2, wobei der sich über die Kette erstreckende Abschnitt (20) des Kupplungsstücks (18') sich niedriger als die Stützfläche (27') der Lamellen (10') erstreckt.

5. Förderboden (5; 6) nach Anspruch 4, wobei der sich über die Kette erstreckende Abschnitt (20') des Kupplungsstücks (18') mit seiner Unterseite (22',23') auf Abstand von dem darunter gelegenen Abschnitt (12') der Kette liegt.

6. Förderboden (5; 6) nach einem der vorhergehenden Ansprüche, wobei das Kupplungsstück (18; 18') an der Kette (11) befestigt ist, vorzugsweise durch eine Schnappverbindung mit der Kette verbunden ist.

7. Förderboden (5; 6) nach einem der vorhergehenden Ansprüche, wobei das Kupplungsstück (18; 18') ein Einsteckteil (19; 19') hat und wobei die Lamellen (10; 10') einen hohlen Aufnahmeraum für das Einsteckteil des Kupplungsstücks haben, wobei der Aufnahmeraum aufwärts und abwärts durch eine Oberwand (14; 14') und eine Unterwand (16; 16') und vorzugsweise Seitenwände (15; 15') der Lamellen (10; 10') begrenzt wird, wobei das Einsteckteil, zum Beispiel über eine Verschmälerung (21; 21'), in den sich über die Kette erstreckenden Abschnitt übergeht.

8. Förderboden (5; 6) nach einem der vorhergehenden Ansprüche, wobei die Kupplungsstücke (18; 18') aus Kunststoff, vorzugsweise Polyethylen, hergestellt sind.

9. Laderaum (3) oder Lastauto (2) mit einem Förderboden (5) nach einem der vorhergehenden Ansprüche versehen.

10. Lade/Löschbahn (4) mit einem Förderboden (6) nach einem der Ansprüche 1-8 versehen.

## Revendications

1. Plancher convoyeur (5; 6) comprenant une série de lamelles (10; 10') positionnées avec leur sens d'extension transversal au sens de convoyage du plancher et avec des extrémités opposées, sur lequel lesdites lamelles sont reliées, à l'endroit desdites extrémités, au moyen de pièces de couplage (18; 18') à une chaîne convoyeuse correspondante (11), sur lequel les lamelles ont une surface de support pour supporter une charge à transporter, **caractérisé en ce que** la chaîne convoyeuse (11) est adjacente aux lamelles (10; 10'), vu dans le sens d'extension des lamelles, et **en ce que** les pièces de couplage (18; 18') ont une partie (20; 20') qui dépasse de l'extrémité de la lamelle correspondante dans le sens d'extension de la lamelle et par dessus la chaîne reliée à ladite pièce de couplage.

2. Plancher convoyeur (5; 6) selon la revendication 1, sur lequel la partie (20; 20') de la pièce de couplage (18; 18') s'étendant au-dessus de la chaîne s'étend au moins jusqu'au côté extérieur de la chaîne (11) en question.

3. Plancher convoyeur (5; 6) selon la revendication 1 ou 2, sur lequel la partie (20) de la pièce de couplage (18) s'étendant au-dessus de la chaîne (11) est supportée sur la chaîne sur sa face inférieure (22).

4. Plancher convoyeur (5; 6) selon la revendication 1 ou 2, sur lequel la partie (20') de la pièce de couplage (18') s'étendant au-dessus de la chaîne s'étend en dessous de la surface de support (27') des lamelles (10').

5. Plancher convoyeur (5; 6) selon la revendication 4, sur lequel la partie (20') de la pièce de couplage (18') s'étendant au-dessus de la chaîne avec sa partie inférieure (22'; 23') est éloignée de la partie (12') de la chaîne située en-dessous d'elle.

6. Plancher convoyeur (5; 6) selon une des revendications précédentes, sur lequel la pièce de couplage (18; 18') est fixée à la chaîne (11), de préférence est reliée à la chaîne par une connexion à pression.

7. Plancher convoyeur (5; 6) selon une des revendications précédentes, sur lequel la pièce de couplage (18; 18') possède une partie d'insertion (19; 19') et sur lequel les lamelles (10; 10') comportent un espace receveur creux pour la partie d'insertion de la pièce de couplage, lequel espace de réception est limité vers le haut et vers le bas par une paroi supérieure (14; 14') et une paroi inférieure (16; 16') et de préférence des parois latérales (15, 15') desdites lamelles (10; 10'), sur lequel la partie d'insertion s'encastre dans la partie s'étendant au-dessus de la chaîne, par exemple via un rétrécissement (21 ; 21').

8. Plancher convoyeur (5; 6) selon une des revendications précédentes, sur lequel les pièces de couplage (18; 18') sont réalisées dans un matériau synthétique, de préférence du polyéthylène.

9. Un espace de chargement (3) ou un camion (2) équipé d'un plancher convoyeur (5) selon une des revendications précédentes.

10. Une voie de chargement/déchargement (4) équipée d'un plancher convoyeur (6) conformément à une des revendications 1 à 8.
